Europäisches Patentamt

(19) European Patent Office

Office européen des brevets

(11) Numéro de publication: **0 187 119**
**B1**

(12) **FASCICULE DE BREVET EUROPEEN**

(45) Date de publication du fascicule du brevet: **01.08.90**

(51) Int. Cl.⁵: **B 29 C 53/06, B 65 D 43/16**

(21) Numéro de dépôt: **85810479.7**

(22) Date de dépôt: **21.10.85**

(54) **Procédé et dispositif pour la fabrication d'un objet en matière plastique pourvu d'une charnière, notamment d'un emballage.**

(30) Priorité: **23.10.84 CH 5066/84**

(43) Date de publication de la demande:
**09.07.86 Bulletin 86/28**

(45) Mention de la délivrance du brevet:
**01.08.90 Bulletin 90/31**

(84) Etats contractants désignés:
**AT BE CH DE FR GB IT LI LU NL SE**

(56) Documents cités:
**CH-A- 455 253**
**GB-A-1 046 671**
**US-A-2 552 353**
**US-A-3 884 742**
**US-A-4 382 536**
**US-A-4 463 046**

(73) Titulaire: **Vuille S.A.**
**Route du Jura 49**
**CH-1700 Fribourg (CH)**

(72) Inventeur: **Vuille, Claude**
**Champ des Fontaines 1**
**CH-1700 Fribourg (CH)**

(74) Mandataire: **Dubois, Jean René et al**
**BOVARD SA Ingénieurs-Conseils ACP**
**Optingenstrasse 16**
**CH-3000 Berne 25 (CH)**

Courier Press, Leamington Spa, England.

## Description

La présente invention concerne un procédé de fabrication d'un objet, notamment d'un emballage, fait de matière plastique et comprenant, en un seul corps, au moins deux parties principales reliées par une charnière, procédé dans lequel on fabrique ou on prend comme matériau de départ une plaque ou feuille de matière plastique multi-couches comprenant, substantiellement sur toute son étendue, une couche copolymère, souple et tenace, et au moins une couche relativement rigide et cassante.

L'invention concerne également un dispositif pour la mise en oeuvre de ce procédé, dans un mode d'exécution particulier.

Des objets, notamment des emballages, de matière plastique répondant à la définition générique précédemment énoncée, sont connus; on en trouve sur le marché. Toutefois, les pièces de matière plastique monolithiques comprenant deux parties principales reliées par une charnière étaient le plus souvent des pièces de matière plastique obtenues par moulage, et non par thermo-formage. On trouve également des pièces, notamment des emballages pour oeufs, en matière plastique thermo-formée, mais qui présentent un type de charnière peu avantageux. En effet, le seul thermo-formage ne permet de diminuer l'épaisseur de la plaque ou feuille de matière plastique servant de matériau de base que dans une mesure très faible, la portion amincie présentant toujours une épaisseur représentant une fraction notable de l'épaisseur primitive. Ainsi, la partie censée constituée une charnière présente encore une assez grande force de rappel élastique, de l'ordre de grandeur de l'élasticité des autres parties de l'objet. De ce fait, ou bien on doit prendre une plaque ou feuille de départ extrêmement mince, afin que cette force de rappel élastique de la charnière ne soit pas gênante, et alors les parties principales de l'objet ne présentent qu'une faible résistance, ou bien on doit prendre une feuille ou plaque de départ suffisamment épaisse pour que les parties principales aient la résistance voulue, mais la charnière est de qualité fort médiocre présentant une grande force de rappel élastique, si bien que, s'il s'agit d'un emballage, la fermeture fiable du couvercle nécessite des moyens particuliers de retenue, et l'ouverture complète du couvercle ne peut par ailleurs pas subsister sans action extérieure (certains emballages d'oeufs actuellement sur le marché illustrent bien cette situation).

Par ailleurs, les objets de matière plastique obtenus par moulage présentent, par rapport aux objets en matière plastique obtenus par thermo-formage, un certain nombre de désavantages qu'on ne peut pas négliger. Tout d'abord, les matières plastiques qui se prêtent au moulage ne sont pas des matières qui fournissent une belle apparence, du genre cristal ou plexiglas. Elles ne sont jamais tout à fait transparentes. Ensuite, ces matières plastiques coulées manquent de rigidité, à moins que les épaisseurs prévues soient très importantes, ce qui est indésirable. Ensuite, également, il n'est pas possible d'obtenir par moulage une pièce de matière plastique d'une certaine étendue dont l'épaisseur reste tout à fait constante, au mons sur les surfaces planes, performance que permet par contre le thermo-formage et qui est importante pour l'aspect de l'objet, notamment pour l'aspect d'une caissette d'emballage, ou étui, pour un produite d'une bonne qualité. Cette constance de l'épaisseur des objets obtenus par thermo-formage provient principalement du fait que la feuille ou plaque servant de matériau de base est elle-même obtenue à l'aide d'une extrudeuse, permettant une constance d'épasseur inatteignable, du moins à un coût raisonnable, par le procédé de moulage. D'autre part, on note que le procédé de travail de la matière plastique par thermo-formage est beaucoup mons coûteux que le procédé utilisant le moulage, car il demande un investissement en appareils et en moules beaucoup moins grand que le procédé faisant appel au moulage.

L'exposé US—A—3 445 052 décrit un procédé du type énoncé dans le préambule de la revendication 1 annexée. Cet exposé propose un article obtenu à partir d'une feuille laminée dont une couche extérieure est pelée à la manière d'un copeau. Cependant dans le procédé suggéré par cette publication antérieure, il n'est pas question de thermo-formage d'une feuille laminée, étant donné que celle-ci est recouverte d'une couche métallique, typiquement d'aluminium, les couches extérieures étant mécaniquement "pelées" à la manière d'un copeau, alors qu'aucun processus de thermo-formage n'a pu intervenir. Même si la publication antérieure prévoit de faire ensuite agir de la chaleur sur la charnière, cela ne saurait, par définition, intervenir qu'après le pelage (alors que l'invention implique que la thermo-formage précède la pratique de l'entaille). De toute façon, on ne peut pas considérer le "chauffage" de la charnière proposé par la publication antérieure comme étant un thermo-formage, à côté du fait qu'il intervient forcément à un moment où, selon l'invention, le thermo-formage ne saurait intervenir.

L'exposé US—A—4 463 046 propose un procédé dans lequel une charnière est réalisée par rupture de la couche rigide et cassante. Cependant le profilé dans equel est réalisée cette charnière n'est aucunement obtenu par thermo-formage, puisqu'il s'agit d'un simple profilé résultant uniquement d'une extrusion. Des languettes de matériau souple et tenace sont introduites uniquement à certains endroits dans la filière d'extrusion. Par ailleurs, dans l'objet de cette publication antérieure américaine, la grande majorité de la surface est formée uniquement de matière rigide et cassante, seules quelques bandes étant insérées, lors de l'extrusion, pour former les charnières.

L'exposé US—A—3 884 742 propose une méthode pour former des lignes de charnière destinée à un matériau de reliure. Cette méthode nécessite le chauffage, par un champ électrique à haute fréquence, d'une partie de l'épaisseur d'une feuille dont l'autre partie ne s'échauffe pas sous l'effet du champ à haute fréquence. On note qu'un tel chauffage sélectif à haute fréquence est coûteux et relativement compliqué, cette méthode différentielle n'étant du reste applicable que pour un matériau du genre PVC. Un matériau plastique du type polystyrène (ou copolymère), n'est pas sensible à une telle action à haute fréquence.

L'exposé US—A—4 382 536 propose un emballage à oeufs fabriqué, par une méthode de moulage, en polystyrène expansé. La charnière est obtenue par "écrasement" du polystyrène expansé. Cet emballage présente les inconvénients précités des objets faits de matière moulée.

L'exposé US—A—2 552 353 propose un procédé de fabrication d'un objet qui nécessite un chauffage à 90—200°C. La matière de base ne résulte pas d'une extrusion et le chauffage des couteaux ou tampons constitue une particularité essentielle de cette méthode. Du fait du chauffage de la charnière, il ne peut pas être prévu d'achever celle-ci par une rupture pour assurer qu'un couteau de coupage partiel laisse en tous les cas intacte une couche souple et tenace formant la charnière.

L'exposé FR—A—2 424 805 propose un système fort compliqué pour la réalisation d'un panneau de garnissage d'une face apparente, typiquement dans l'aménagement intérieur d'un véhicule. L'objet fabriqué peut comprendre une rainure pour permettre un rabattement lors du montage; la matière plastique utilisée est homogène, d'un type qui modifie ses propriétés mécaniques sous l'effet d'une compression non-élastique. Ce panneau de garnissage est éloigné d'un objet pouvant avoir la forme d'un emballage.

L'exposé FR—A—2 490 143 propose un procédé de préparation d'un flanc destiné à constituer une boîte, à partir d'une feuille de matériau synthétique mono-couche. Cette préparation fait appel à un système de coupage à chaud nécessitant une température de 80 à 130°C.

Enfin, l'exposé GB—A—1 046 671 propose une méthode d'assemblage à chaud de couches thermo-plastiques, pour former un article creux à parois multi-couches, les couches étant toutefois assemblées seulement lors de la découpe. Ici aussi la création d'une charnière nécessite un chauffage, puis l'adjonction d'une bande de nylon. Il est douteux que l'objet ainsi obtenu soit en un seul corps, le matériau plastique du type "mousse" utilisé n'étant pas en lui-même multi-couche et ne comprenant pas de couche souple et tenace, la charnière requérant l'adjonction de la bande de nylon.

La présente invention a notamment pour but de fournir un procédé de fabrication d'un objet en matière plastique en particulier d'un emballage pourvu d'une charnière, du type générique précédemment défini mais qui soit exempt des inconvénients de l'art antérieur. L'invention a également pour but de fournir des moyens avantageux pour la mise en oeuvre du procédé en question.

Différents aspects de l'invention apparaîtront du reste à la lecture de la description.

Conformément à l'invention, ce but est atteint par la présence des caractères qui sont énoncés respectivement dans la revendication 1 en ce qui concerne le procédé de fabrication, et dans la revendication en ce qui concerne les moyens de réalisation de la charnière pour la mise en oeuvre du procédé de fabrication d'un objet pourvu d'une charnière selon la revendication.

Les autres revendications concernent des formes d'exécution ou modes de mise en oeuvre particulièrement avantageux quant à leur simplicité, leur fiabilité, leur faible coût, etc.

Le dessin annexé illustre, à titre d'exemple, une forme de réalisation de l'object de l'invention. Dans ce dessin:

La fig. 1 est une vue en perspective d'une pièce monolithique de matière plastique thermo-formée, qui consiste en un emballage, typiquement transparent, comprenant une partie principale de base, formant caissette avec alvéoles, et une partie principale formant couvercle, ces deux parties étant reliées en un seul corps par une portion-charnière,

la fig. 2 et une vue en coupe, à échelle agrandie, de la partie de la caisse d'emballage à charnière de la fig. 1 qui se situe au voisinage de la portion destinée à former charnière, la fig. 2 montrant l'état qui résulte du thermo-formage avant l'intervention de moyens de découpage,

la fig. 3 est une vue schématique qui montre comment une pièce conforme à la fig. 2 subit un découpage de contour en même temps qu'une creusure linéaire non traversante à l'endroit destiné à former charnière, et

la fig. 4 et une vue similaire à la fig. 2 mais qui montre l'état terminé, alors que, à la suite du découpage, la charnière est formée.

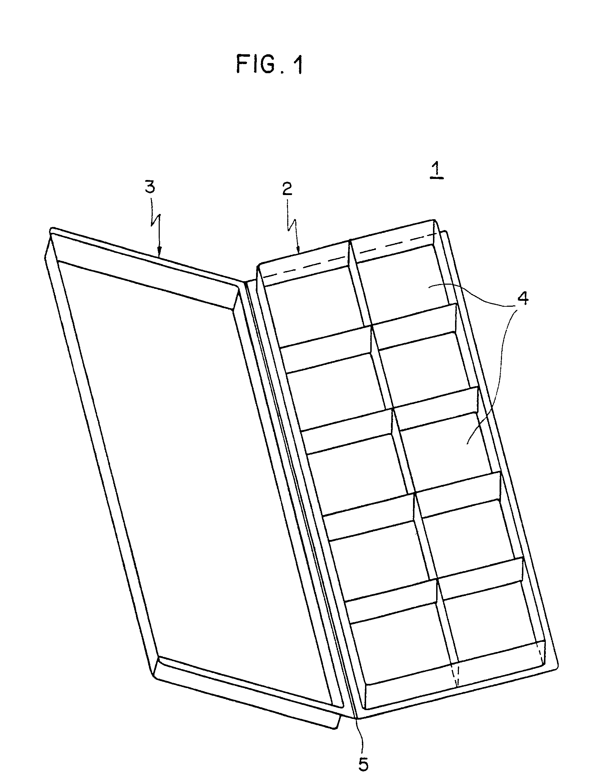

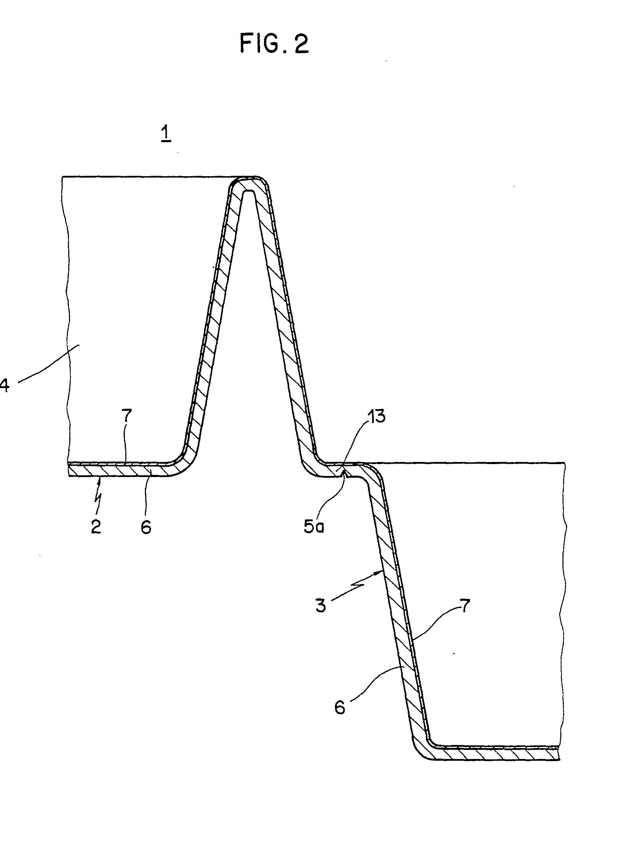

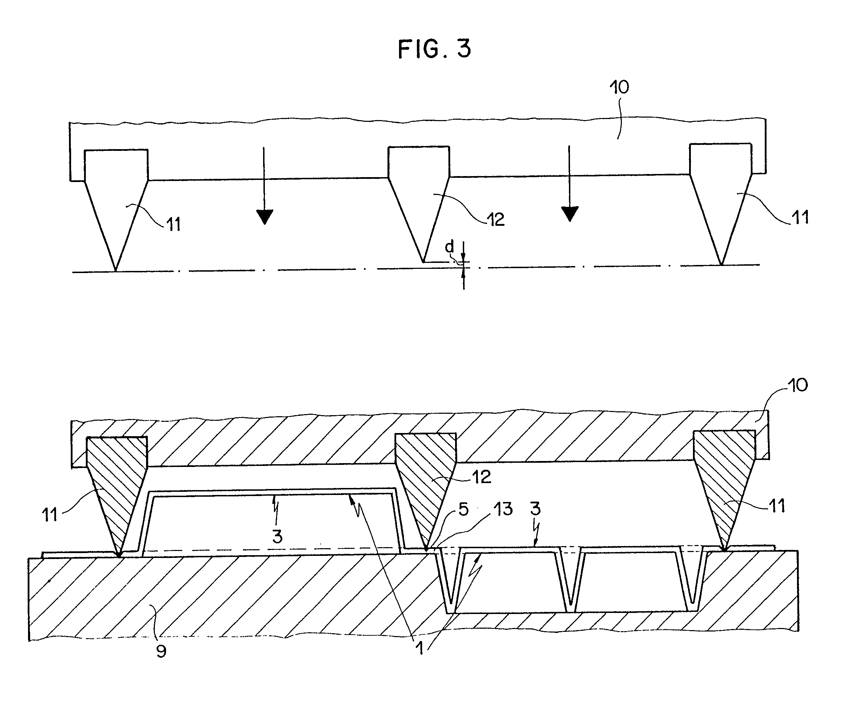

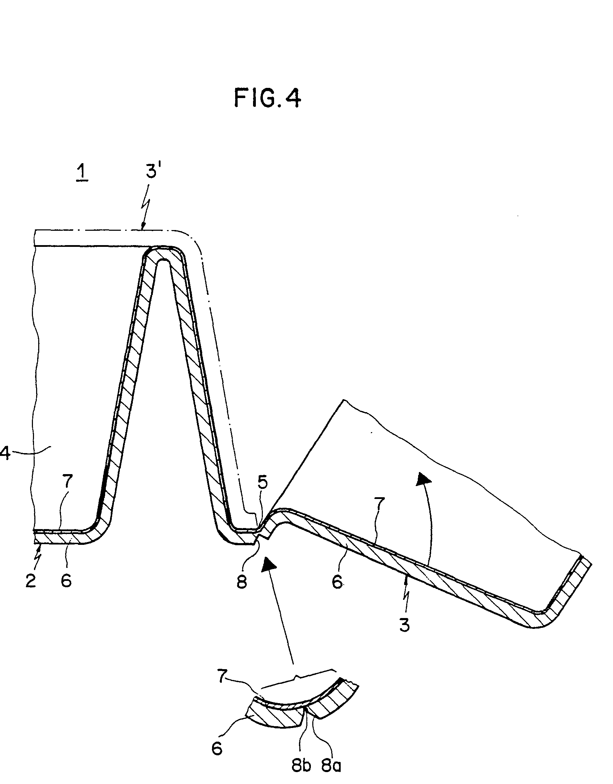

On note que la fig. 4 représente une partie de l'objet dans une position qui correspond d'une certaine façon à la fig. 1, dans laquelle les alvéoles s'ouvrent vers le haut. La fig. 2, similaire, représente la partie de pièce dans la même position. Par contre, la fig. 3 se devait, pour expliquer le processus de coupe partielle sur la ligne de charnière, de présenter l'objet en position inversée, c'est-à-dire les alvéoles tournés vers le bas.

La fig. 1 montre une boîte d'emballage 1 formée de deux parties principales, 2, 3, qui sont reliées en un seul corps, par une charnière 5. Toute la boîte d'emballage 1 et venue d'une pièce d'un processus de thermo-formage. La partie principale 2 constitue une boîte de base présentant des alvéoles 4, lesquels sont destinés à recevoir par exemple des portions de produits alimentaires, ou des pièces d'un usage quelconque, par exemple cosmétique, ou encore un assortiment de pièces pour un quelconque domaine, bijouterie, petite mécanique, électronique, etc, les utilisations possibles étant innombrables. La partie principale 3 forme un couvercle qui vient, à l'état fermé, recouvrir les alvéoles et s'emboîter autour du contour latéral de la partie principale 2.

Le couvercle pourrait naturellement ne comprendre qu'une face, ou encore un rebord arrière, relié à la charnière 5, et une face supérieure, sans les trois autres rebords.

Le détail de la charnière 5 et des éléments voisins et montré à la fig. 4. On y retrouve les mêmes éléments qu'à la fig. 1, et de plus certains autres qui seront considérés plus loin. On remarque qu'à la fig. 4, le couvercle 3 est représenté légèrement incliné, comme à la fig. 1, la position fermée du couvercle étant par ailleurs indiquée en traits pointillés en 3' sur cette fig. 4.

On remarque que les parties principales 2 et 3 ont des dimensions d'étendue (c'est-à-dire de longueur et de largeur) fortement supérieures à leur dimension d'épaisseur de paroi. En effet, la feuille à partir de laquelle la boîte d'emballage 1 est formée par thermo-formage a une épaisseur d'approximativement 1 mm, qui se retrouve approximativement dans toutes les parois de l'emballage 1. Dans un prototype d'essai, les dimensions d'étendue, c'est-à-dire la largeur et la longueur des parties 2 et 3 étaient situées entrete 10 et 20 cm, mais, avec la conception proposée, cette étendue ne connaît pratiquement pas de limite, sinon celles qu'imposent les circonstances pratiques. On a vu précédemment quelles auraient été les contingences rencontrées si l'objet de la fig. 1 avait été fabriqué par la technique du moulage de matière plastique ou également pa la technique du thermo-formage classique. En particulier, dans le cadre de l'art antérieur, il n'aurait pas été possible d'obtenir une aussi belle boîte avec un aussi grand rapport entre les dimensions d'étendue et la dimension d'épaisseur de paroi. Le prototype réalisé était parfaitement transparent, avec un parallélisme des faces tel qu'aucune déformation optique n'intervenait. Naturellement, cette boîte d'emballage serait également réalisable, par la même technique, sous une forme présentant une certaine coloration, typiquement transparente mais pouvant également être semi-transparente, voire opaque. Des dessins ou images pourraient également être prévus.

Les fig. 2 à 4 représentent la façon dont la boîte d'emballage 1 est fabriquée. La fig. 2 montre le détail des portions voisines de l'endroit 13, longiforme, où sera établie la charnière 5, le tout à l'état tel qu'il apparaît au sortir du thermo-formage, la charnière 5 n'étant pas encore exactement formée. Lors du thermo-formage, on peut, mais cela n'est nullement une nécessité, prévoir la formation d'un très petite gorge 5a, destinée à guider le couteau de coupage partiel 1 2 dont l'action sera décrite plus loin. Le thermo-formage permet en effet de diminuer légèrement l'épaisseur de la feuille de base, mais cela seulement dans une faible mesure, comme on le voit en 5a.

La fig. 3 représente l'agencement qui intervient après le thermo-formage, pour découper le contour de la pièce issue du thermo-formage et amorcer au moins l'entaille qui va créer la charnière 5. La fig. 4 illustre la fin du processus d'établissement de la charnière, qui fournit la boîte d'emballage terminée.

Aux fig. 2 et 4, on voit que les parois, aussi bien de fond, de couvercle, que de rebord, sont faites par application de la technique du thermo-formage à une plaque de matière plastique multi-couches. Celle-ci, aussi bien à l'origine que dans l'objet terminé, comprend une couche 6, d'une épaisseur notablement supérieure à la moitié de l'épaisseur totale, qui est faite de matière plastique rigide et cassante, par exemple du polystyrène du type "cristal". L'autre couche, 7, dont l'épaisseur et notablement inférieure à la moitié de l'épaisseur totale, est faite de matière plastique souple et tenace, par exemple du "polystyrène modifié" (styrolux). Pour l'obtention de la feuille ou plaque primitive, qui va subir le thermo-formage, on utilise une extrudeuse, d'un modèle très récent qui pemet justement la formation d'une feuille ou plaque multi-couches. Les couches d'une plaque multicouches de ce type ont entre elles une adhérence très supérieure à l'adhérence que l'on obtiendrait par exemple en collant une feuille adhésive sur une plaque ou feuille de matière plastique homogène. Il faut toutefois, pour que les couches adhèrent bien entre elles, d'une façon qui interdit toute séparation, similairement au cas d'une feuille ou plaque homogène, que les matières plastiques soient adaptées l'une à l'autre. C'est le cas lorsqu'il s'agit de matière plastique de la même famille, comme justement le polystyrène "cristal" pour la couche rigide et cassante, et le polystyrène "modifié" (styrolux) pour la couche souple et tenace. Il n'est toutefois pas exclu d'utiliser deux matières plastiques qui ne seraient pass de la même famille, pour autant qu'il s'agisse de matières plastiques "compatibles'. En considérant la fig. 2 et en se rappelant qu'elle représente en coupe et à échelle agrndie la portion de charnière de la fig. 1, on voit que la pièce issue de thermo-formage comprend une portion longiforme 13 entre les deux parties principales 2 et 3, et c'est dans cette portion que l'on va établir la charnière 5, telle que montrée à la fig. 4. Pour cela, on utilise avec avantage un dispositif tel que celui représenté à la fig. 3.

Cette figure représente une partie d'une presse qui sert à établir le contour de l'objet, après thermo-formage, et qui sert en même temps à l'établissement, ou plus précisément à la préparation pour l'établissement définitif, de la charnière 5. Selon le cas, le thermo-formage peut intervenir individuellement pour chaque objet à fabriquer ou en parallèle, sur une grande surface de feuille ou plaque de départ, pour un grand nombre d'objets à fabriquer. C'est ce dernier cas qui est envisagé à la fig. 3, laquelle représente cependant le découpage d'un objet seulement. La pièce 1, à l'état non encore terminé tel qu'il résulte du thermo-formage, est disposée sur la table de presse 9. On a admis ici que le découpage se faisait sur un posage différent de celui qui sert au thermo-formage, toutefois, la même méthode pourrait être appliquée sur un posage qui serait déjà celui du thermo-formage (les pièces 9 et 10 devant dans ce cas seulement avoir une forme quelque peu différente). La tête de presse 10 porte des couteaux qui consistent en un ou plusieurs couteaux 11 de découpage de contour, et un couteau de coupage partiel 12. Lorsque la tête de presse 10 s'abaisse en direction de la table de presse 9, le ou les couteau(x) 11 découpe(nt) adéquatement le contour de l'objet à fabriquer dans la feuille de matière plastique ayant subi le thermo-formage. Le ou les couteau(x) 11 traverse(nt) complètement la feuille de matière plastique, pour découper adéquatement son contour, puis leur pointe vient buter contre la surface de la table de presse 9. Le couteau de coupage partiel 12 a, quant à lui (comme représenté schématiquement à la partie supérieure de la fig. 3) sa pointe légèrement en retrait de la ligne joignant la pointe des deux couteaux 11 (ou de deux endroits opposés de la pointe d'un seul couteau 11, disposé sur tout le contour et apparaissant donc deux fois dans la vue en coupe de la fig. 3). Le retrait de la pointe du couteau 12 par rapport à la pointe du ou des couteau(x) 11 a une mesure d, représentée à la fig. 3, qui doit être, compte tenu de toutes les tolérances, supérieure à l'épaisseur de la couche 7 souple et tenace de la matière plastique. Dans ces conditions, il n'y a aucun risque pour que le couteau 12 vienne entamer cette couche souple et tenace 7, ce qui créerait un risque de manque de solidité de la charnière 5. On note que l'épaisseur de la couche souple et tenace 7, typiquement de polystyrène modifié, se situe entre 0,10 et 0,15 mm, tandis que la couche 6, beaucoup plus rigide et cassante, typiquement de polystyrène cristal, a une épaisseur d'approximativement 0,85 à 0,90 mm, pour avoir une épaisseur totale d'environ 1 mm. Ces valeurs, selon lesquelles la couche souple et tenace n'intervient que pour mons du quart de l'épasseur totale, se sont avérées favorables. Toutefois, on pourrait également prévoir une épaisseur totale différente, même notablement supérieure à 1 mm, mais dans ce cas, la différence d'épaisseur devrait être établie sur la couche 6, rigide et cassante, l'épaisseur de la couche 7 — pour autant au moins qu'il s'agisse de polystyrène modifié — devant rester de l'ordre de 0,10 à 0,15 mm.

Du fait que le retrait d (fig. 3) ne devrait jamais, compte tenu de toute tolérance, être inférieur à l'épaisseur de la couche 7 souple et tenace, il résultera de l'action du couteau 12 une encoche qui, à moins d'une très grande précision dont l'exigence serait en fait superflue, ne traversera pas la totalité de la couche rigide et cassante 6. Après l'action du couteau 12, il sera donc probable qu'une petite épaisseur de couche rigide et cassante 6 subsistera à l'état non coupé, et c'est cela qui est illustré dans la partie "grossie" de la fig. 4. On voit que la pointe du couteau 12 a établi dans la partie longiforme 13 une entaille longitudinale et rectiligne. Comme cela est montré à la partie "grossie" de la fig. 4, l'entaille due au couteau 12 lui-même présente des parois 8a qui ne vont pas jusqu'à la couche souple et tenace 7.

Toutefos, l'épaisseur de couche 6 rigide et cassante qui subsiste est très faible et le simple faite de rabattre la partie principale 3 en direction de la partie principale 2 de la façon illustrée à la fig. 4 provoque la rupture de cette épaisseur restante de couche 6, ce qui fournit la partie 8b, provenant d'une brisure, que l'on voit "grossie" de la fig. 4. Par contre, à la partie principale de la fig. 4, cette petite différence de profil d'entaille n'apparaît guère et l'on n'a représenté qu'une entaille 8, traversant toute la couche 6 rigide et cassante. Il faut toutefois bien comprendre que la partie charnière 5 est constituée par la couche souple et tenace 7 qui n'aura assurément pas été touchée d'une façon qui aurait pu l'abimer par la pointe du couteau 12 (fig. 3). Il est donc bien juste de parler, pour la séparation en deux parties de la couche rigide et cassante 6, alors que la couche souple et tenace 7 reste monolithique pour assurer la charnière 5, d'une "rupture et/ou coupure", chacune des éventualités pouvant se présenter. En effet, on pourrait également éviter d'utiliser le couteau 12 représenté à la fig. 3 et faire appel uniquement au pliage représenté à la fig. 4 pour rompre la couche rigide et cassante 6 dans la portion longiforme 13, à l'endroit très légèrement amorcé par le petit creux 5a que l'on peut obtenir lors du thermo-formage (fig. 2). Ainsi donc, selon les cas, on aura seulement une rupture, seulement une coupure, ou une coupure suivie d'une cassure.

On remarque encore que la possibilité existerait tout à fait d'utiliser une feuille multi-couches à trois couches, à savoir approximativement au milieu de l'épaisseur une mince couche de matière plastique souple et tenace, et, respectivement de part et d'autre de celle-ci, deux couches relativement rigides et cassantes. Dans ce cas, on pourrait naturellement entailler la feuille de matière plastique des deux côtés préalablement à l'établissement définitif de la charnière au milieu de l'épaisseur de la feuille, toutefois, une entaille faite d'un côté pourrait déjà donner un dégagement suffisant pour que l'on puisse plier l'objet et provoquer la rupture de la matière rigide et cassante sur l'autre face.

On note encore que la mise en contour et le coupage partiel, tel que l'explique la fig. 3, peut intervenir à chaud ou à froid, à une température qui toutefois est de préférence inférieure à celle du thermo-formage. Par ailleurs il se pourrait que le thermo-formage lui-même délivre déjà l'objet avec le contour désiré. Dans ce cas, la "mise en contour" se résumerait à un centrage en vue du coupage partiel à l'aide du couteau 12, et les couteaux 11 deviendraient de simples "tampons de centrage" dont la butée contre la table de presse 9 (fig. 3) garderait malgré tout la fonction importante expliquée en liaison avec cette figure 3.

On note que le système illustré à la fig. 3 serait sans difficulté applicable au cas où le thermo-formage n'aurait pas établi les dites zones marginales à mettre en contour et la dite portion longiforme, les niveaux sur le dessus de la table 9 et les niveaux des extrémités des couteaux 11, 12 ayant simplement à être décalés en conséquence. L'effet de maintien intact de la couche souple et tenace serait le même.

De ce qui précède, il ressort bien que, à l'aide des mesures techniques proposés par l'inventon, on atteint bel et bien le but visé par cette invenion, à savoir, d'une façon générale, à fabriquer un objet de matière plastique du type en question qui cumule les avantages de ce que l'art antérieur connaissait, d'une part pour les pièces thermo-formées et, d'autre part pour les pièces moulées, mais qui, par contre, n'est affecté ni des désavantages que l'art antérieur impliquait pour l'une de ces méthodes, ni des désavantages que l'art antérieur impliquait pour l'autre de ces méthodes.

## Revendications

1. Procédé de fabrication d'un objet, notamment d'un emballage, fait de matière plastiques et comprenant, en un seul corps, au moins deux, parties principales reliées par une charnière, procédé dans lequel on fabrique ou on prend comme matériau de départ une plaque ou feuille de matière, plastique multi-couches comprenant, substantiellement sur toute son étendue, une couche copolymère, souple et tenace, et, au, moins une couche relativement rigide et cassante, caractérisé en ce qu'on fait subir à cette plaque ou feuille un processus de thermo-formage produisant la configuration désirée pour l'objet, avec une portion longiforme destinée à présenter la dite charnière, et en ce qu'on pratique, sur une ligne de cette portion longiforme, une coupure entaillant ou traversant la dite couche relativement rigide et cassante, tout en laissant, sans recours à des effets thermiques, la dite couche souple et tenace assurément intacte sur cette ligne, de façon à y constituer la dite charnière.

2. Procédé selon la revendication 1, caractérisé en ce qu'on pratique la dite coupure de façon telle qu'elle entaille la dite couche relativement rigide et cassane, en consigne seulement sur la majeure partie de l'épaisseur de cette couche, le reste de cette épaisseur étant rompu, ou ruptible, par un pliage ayant l'autre couche comme charnière.

3. Procédé selon la revendication 1 ou la revendication 2, caractérisé en ce qu'on prend ou fabrique la dite plaque ou feuille multi-couches en une constitution telle que la dite couche souple et tenace soit d'une épaisseur inférieure à la moitié de celle de la plaque ou feuille, et que les dites couches respectives, souple et tenace d'ne part, et relativement rigide(s) et cassànte(s) d'autre part, consistent en des matières plastiques de la même famille, ou compatibles.

4. Procédé selon l'une des revendications 1 à 3, caractérisé en ce que, en tant que dite plaque ou feuille de matière plastique multi-couches, on prend pour la dite couche souple et tenace du polystyrène modifié (styrolux) et pour la dite couche relativement rigide et cassante du polystyrène du type cristal.

5. Procédé selon l'une des revendications 1 à 4, caractérisé en ce que, pour effectuer la dite coupure, on effectue, en même temps qu'une mise en contour par des moyens traversant toute l'épaisseur de la feuille ou plaque, un coupage en forme d'entaille le long de la dite ligne par des moyens disposés pour traverser la majeure partie de la dite couche relativement rigide et cassante, et approcher mais en aucun cas entamer la dite couche souple et tenace.

6. Procédé selon l'une des revendications 1 à 5, caractérisé en ce qu'on fabrique ou prend comme matériau de départ une dite plaque ou feuille dans laquelle la couche souple et tenace intrevient pour moins d'un quart et présente une épaisseur propre de 0,10 à 0,15 mm, les dites parties principales ayant des dimensions d'étendue qui sont très grandes pr rapport à leur dimension d'épaisseur.

7. Dispositif pour la mise en oeuvre de l'étape du procédé selon la revendication 1, dans le mode défini par la revendication 5, étape dans laquelle la dite coupure intervient, le thermo-formage ayant d'abord établi dans un même plan les zones marginales à mettre en contour et la dite portion longiforme, caractérisé en ce qu'il comprend, fixés à une même tête de presse de découpage, des couteaux, ou tampons de centrage, de mise en contour, et un couteau de coupage partiel disposé, par rapport au contour, le long de la ligne de charnière, la pointe de ce couteau de coupage partiel étant en retrait, d'une certaine distance (d) supérieure à l'épaisseur de la couche souple et tenace, par rapport à l'extrémité des couteaux ou tampons de contour, que l'abaissement de la tête de presse fait buter contre le plan d'appui d'une table de presse, cette distance (d) étant établie pour assurer le non-entamage de la couche souple et tenace, sans exiger de conditionnement thermique.

## Patentansprüche

1. Herstellungsverfahren für einen Kunststoffgegenstand, insbesondere eine Verpackung, mit einem einzigen Körper, wenigstens zwei über ein Scharnier miteinander verbundenen Hauptabschnitten, in welchem Verfahren man als Ausgangsmaterial eine Platte oder Tafel aus mehrschichtigem Plastikmaterial anfertigt oder nimmt, mit einer flexiblen und zähen Kopolymerschicht im wesentlichen über ihrer gesamten Breite und wenigstens einer relativ festen und spröden Schicht, dadurch gekennzeichnet, dass man diese Platte oder Tafel einem Thermoformverfahren unterzieht, in welchem die für den Gegenstand gewünschte Form erzeugt wird, mit einem länglichen Abschnitt, der dazu bestimmt ist, das erwähnte Scharnier zu bilden, und dass man auf einer Linie dieses länglichen Abschnittes einen Schlitz ausführt, der die erwähnte feste und spröde Schicht einkerbt oder durchkreuzt, wobei die erwähnte flexible und zähe Schicht ungeachtet thermischer Wirkungen über diese Linie sicher erhalten bleibt, um auf diese Weise das erwähnte Scharnier zu bilden.

2. Verfahren nach Anspruch 1, dadurch gekennzeichnet, dass man den erwähnten Schlitz so ausführt, dass er die besagte relativ feste und spröde Schicht nominell nur über den Grossteil der dicke dieser Schicht einkerbt, und der Rest dieser Dicke durch eine Falzung gebrochen oder brüchig wird, wobei die andere Schicht als Scharnier dient.

3. Verfahren nach Anspruch 1 oder 2, dadurch gekennzeichnet, dass man die besagte mehrschichtige Platte oder Tafel in einem solchen Zustand nimmt oder herstellt, dass die erwähnte flexible und zähe Schicht eine Dicke aufweist, die unterhalb der Hälfte derjenigen derr Platte oder Tafel liegt, und dass die erwähnten jeweiligen Schichten, flexibel und zäh einerseits, und relativ fest und sprödde andererseits, aus Plastikmaterialien der gleichen Familie oder mit diesem Verträglichen bestehen.

4. Verfahren nach einem der Ansprüche 1 bis 3, dadurch gekennzeichnet, dass man als Platte oder Tafel aus mehrschichtigem Plastikmaterial für die erwähnte flexible und zähe Schicht modifiziertes Polystyrol (Styrolux) und für die erwähnte relativ feste und spröde Schicht Polystyrol in kristalliner Form nimmt.

5. Verfahren nach einem der Ansprüche 1 bis 4, dadurch gekennzeichnet, dass man zum Ausführen des erwähnten Schlitzes gleichzeitig mit dem Ausbilden der Kontur mit den Mitteln, die die gesamte Dicke der Platte oder Tafel durchkreuzen, einen Schnitt in Form einer Kerbe längs der erwähnten Linie mit Mitteln ausführt, die vorgesehen sind, den Grossteil der erwähnten festen und spröden Schicht zu durchkreuzen und sich an die erwähnte flexible und zähe Schicht anzunäheren, ohne diese jemals anzuschneiden.

6. Verfahren nach einem der Ansprüche 1 bis 5, dadurch gekennzeichnet, dass man als Ausgangsmaterial eine erwähnte Platte oder Tafel nimmt ode erzeugt, in welcher die flexible und zähe Schicht zu weniger als einem Viertel vorkommt und eine reine Dicke von 0,1 bis 0,15 mm aufweist, und wobei die erwähnten Hauptabschnitte Breitenabmessungen haben, die gegenüber ihren Dickenabmessungen sehr gross sind.

7. Vorrichtung zum Durchführen des Schrittes des Verfahrens nach Anspruch 1, in der Art, wie in Anspruch 5 definiert, in welchem Verfahrensschritt das besagte Schlitzen vorkommt, wobei das Thermoformen in einer gleichen Ebene zuerst vorgenommen wird, in der die Kontur der Randzone ausgebildet wird und der erwähnte längliche Abschnitt, dadurch gekennzeichnet, dass sie an einem selben Kopf der Stanzpresse Messer oder Zentrierpuffer zum Bilden der Aussenkontur umfasst, und ein Messer zum partiellen Schneiden gegenüber der Kontur längs der Scharnierlinie vorgesehen ist, wobei die Spitze dieses Messers um einen bestimmten Abstand (d) oberhalb der Dicke der flexiblen und zähen Schicht gegenüber der Spitze der Messer oder Konturpuffer zurückversetzt ist, dass das Absenken des Kopfes, der Presse ein Stossen gegen die Auflageebene eines Pressentisches bewirkt, wobei diese Distanz (d) vorgesehen ist, um das Nicht-Anschneiden der flexiblen und zähen Schicht sicherzustellen, ohne eine thermische Behandlung zu erfordern.

## Claims

1. Process for manufacturing an object, particularly a packaging, made of plastics material and comprising, in a single body, at least two main parts joined by a hinge, in which process there is manufactured or taken as starting material a sheet or film of multi-layer plastics material comprising, over substantially its entire expanse, a flexible and tough copolymer layer and at least one relatively rigid and frangible layer, characterized in that this sheet or film is subjected to a heat-moulding process producing the desired configuration for the object, with an elongate portion intended to present the said hinge, and in that a cut slitting or traversing the said relatively rigid and frangible layer is made on a line of this elongate portion, whilst leaving the said flexible and tough layer, without recourse to thermal effects, assuredly intact on this line so as to constitute there the said hinge.

2. Process according to claim 1, characterized in that the said cut is made in such a way that it slits the said relatively rigid and frangible layer, as nominal value, only on the major part of the thickness of this layer, the rest of this thickness being broken, or breakable, by folding having the other layer as a hinge.

3. Process according to claim 1 or claim 2, characterized by taking or manufacturing the said multi-layer sheet or film in a make-up such that the said flexible and tough layer is less than half as thick as the sheet or film, and in the respective said layers, flexible and tough on the one hand, and relatively rigid and frangible on the other hand, consist of plastics materials of the same family, or compatible ones.

4. Process according to one of the claims 1 to 3, characterized in that, as the said sheet or film of multi-layer plastics material, modified polystyrene (styroloux) is taken for the said flexible and tough layer and crystal-type polystyrene is taken for the said relatively rigid and frangible layer.

5. Process according to one of the claims 1 to 4, characterized in that, for effecting the said cut, a slit-shaped cut is made, at the same time as an outlining by means passing through the entire thickness of the film or sheet, along the said line by means disposed for traversing the major part of the said relatively rigid and frangible layer and for approaching, but in no case impairing, the said flexible and tough layer.

6. Process according to one of the claims 1 to 5, characterized by manufacturing or taking as the starting material a said sheet or film in which the flexible and tough layer take up at least one-quarter and has an own thickness of from 0.10 to 0.15 mm, the said main parts having expanse dimensions which are very great as compared with their thickness dimension.

7. Device for carrying out the step of the process according to claim 1, in the manner defined by claim 5, in which step the said cut takes place, the heat-moulding having first determined in the same plane the marginal zones to be outlined and the said elongate portion, characterized in that it comprises, fixed to the same blanking-press head, outlining cutters or centring plugs, and a partial-cutting blade disposed, relative to the outline, along the hinge line, the tip of this partial-cutting blade being set back by a certain distance (d) greater than the thickness of the flexible and tough layer, relative to the ends of the outlining cutters or plugs, which the lowering of the press head causes to butt against the support plane of a press table, this distance (d) being determined for ensuring the non-impairment of the flexible and tough layer without requiring thermal conditioning.

FIG. 1

FIG. 2

FIG. 3

FIG.4